# EUROPEAN PATENT SPECIFICATION

(11) **EP 2 288 838 B1**
(45) Date of publication and mention of the grant of the patent: **26.02.2014**
(21) Application number: 09738434.1
(22) Date of filing: 01.05.2009
(51) Int. Cl.: F16L 55/26, G01B 7/28

(54) **PIPELINE MONITORING APPARATUS AND METHOD**
ROHRLEITUNGSÜBERWACHUNGSGERÄT UND -VERFAHREN
APPAREIL ET PROCÉDÉ DE SURVEILLANCE DE PIPELINE

(30) Priority: 01.05.2008 GB 0807940
(43) Date of publication of application: 02.03.2011
(73) Proprietor: Pipeline Engineering & Supply Co. Ltd., Catterick Bridge Richmond DL10 7JQ (GB)
(72) Inventor: SHORT, Gordon, Campbell, Lothian EH14 1JY (GB); WATSON, William, Stanley, Darlington DL2 2PF (GB); ALLEN, Peter, James, Leicestershire LE12 6QB (GB); BURD, John, Ferris, Nottinghamshire NG2 7QD (GB)
(74) Representative: Hendry, Niall James
(86) International application number: PCT/GB2009/050452
(87) International publication number: WO 2009/133404

(56) References cited:
- WO-A-96/13699
- GB-A- 2 410 070
- US-A- 3 974 680
- US-A1- 2005 016 302
- US-A1- 2007 022 830
- US-B1- 6 847 207

## Description

This invention relates to an apparatus and method for monitoring and/or measuring the presence of debris within pipelines. The term "debris" is used herein to denote any type of non-ferrous debris, fouling or scale on the internal surface of a pipeline which reduces the bore of the pipeline.

The presence of debris can cause a number of problems. The capacity and the flow characteristics of the pipeline can be adversely affected. More importantly perhaps, a clean pipeline is essential for undertaking intelligent pigging operations to inspect the pipe wall for corrosion, and for delivery of treatments to the pipe surface. A considerable amount of money is wasted on incomplete or inaccurate inspection runs, and on ineffective chemical treatments. These can lead to misleading data and questionable integrity management of the pipelines.

An object of the present invention is to provide a means for convenient and effective monitoring and logging of debris within a pipeline.

The use of pigs (autonomous vehicles propelled by pipeline pressure and flow) is well known (see for instance WO 96/13699 A,GB 2410070 A and US 3974680 A). Pigs are known in which hinged fingers or callipers are biased outwardly intro contact with the inner wall surface. These are used to measure the internal diameter of the pipeline, which can reveal the presence and location of gross obstructions. However, these known pigs are not sufficiently accurate to meet the objectives of the present invention. First, this technique assumes that the inner diameter of the pipeline is still the same as originally, and thus a section which has debris on top of corrosion-wasted wall thickness may be detected as normal. Also, a debris coating of 5 mm or less may be significant to the success of chemical treatment and/or inspection programs, but may be within the tolerance of the pipeline specification.

A pipeline inspection vehicle having the features recited in the preamble of claims 1 and 13 is known from US6847207B1. A further inspection system using magnetic sensors in the proximity of the pipeline wall is known from US2007/022830A1.

In addition to pigs, there are also known other types of autonomous pipeline vehicles which may be used for inspection purposes, for example self-propelled crawlers. We prefer to apply the present invention to pigs, which require lower power storage than self propelled vehicles, but the invention can equally be applied to self-propelled crawlers, cable tethered crawlers, and the like.

The present invention provides a pipeline inspection vehicle comprising the features of claim 1, and a method of monitoring debris in a pipeline comprising the features of claim 13.

Embodiments of the invention will now be described, by way of example only, with reference to the drawings, in which:
Fig. 1 is a side view of a pipeline pig forming one embodiment of the invention;
Fig. 2 is a schematic side view showing one finger assembly of the pig of Fig. 1;
Fig. 3 is a schematic cross-section of part of the finger of Fig. 2 to an enlarged scale;
Fig. 4 shows one form of electronics in the pig of the present invention;
Fig. 5 shows part of an exemplary pig in greater detail;
Fig. 6 is a side view of a pipeline pig forming a second embodiment of the invention; and
Fig. 7 is a side view showing part of the pig of Fig. 6 in greater detail, to an enlarged scale.

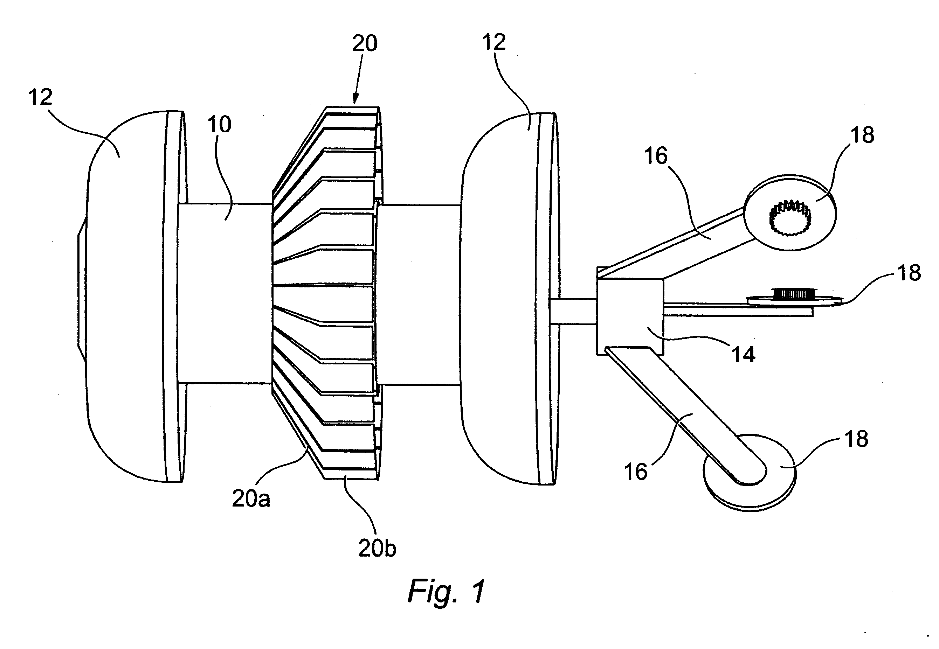

Referring to Fig. 1, a pipeline pig comprises a metal body or mandrel 10. Resilient cups 12 typically of polyurethane are clamped to and extend from the body 10 for engagement with the inner wall of a pipeline such that the pig is transported through the pipeline by product pressure and flow rate. A hub 14 extends rearwardly of the body 10 and mounts three equispaced arms 16 each carrying a wheel 18, the arms 16 being biased outwardly to engage the wheels 18 with the pipeline wall. The wheels 18 drive rotary sensors (not shown) to provide odometer information. As an alternative, two or four odometer wheels could be used. The pig as thus far described is known per se.

The pig is also provided with an annular ring of resilient fingers 20 each of which has an outwardly extending portion 20a and an outer axial portion 20b. The fingers 20 could be, for example, integral spring steel fingers. Alternatively, rigid fingers hinged to the body 10 and biased by springs or the like could be used. In typical embodiments, the fingers 20 are about 30mm wide, giving a total of 25 fingers for a 10 inch pipeline, increasing proportionately up to 110 fingers for a 42 inch pipeline, and so on for greater diameters. In general terms, it is preferred to use as great a number of detectors as can be accommodated for maximum resolution.

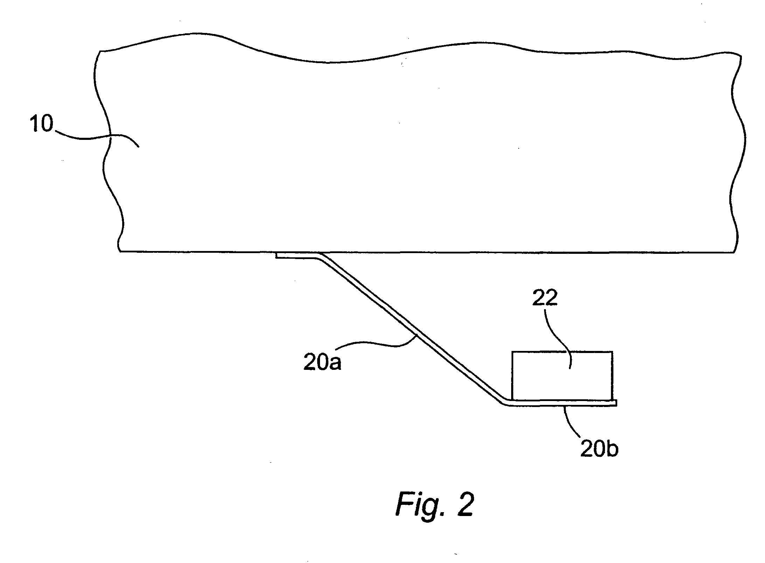

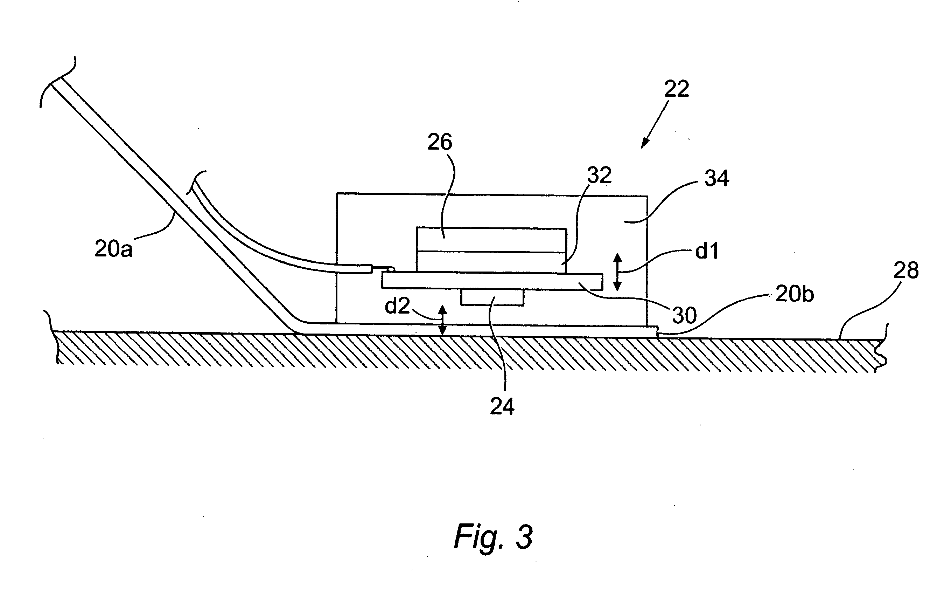

As seen in Figs. 2 and 3, each of the fingers 20 carries within its axial portion 20b a sensor assembly 22. Each sensor assembly 22 is therefore drawn along the pipeline in a fixed relation to the inner surface 28 of the pipeline, i.e. the inner surface provided by the pipe itself or by any debris attached to the pipe wall. It will be appreciated that the fingers 20 can flex independently of each other, and thus each sensor assembly 22 monitors a small part of the circumference independently of the other parts.

The sensor assembly 22 comprises a Hall effect sensor 24 and a magnet 26 spaced apart by a distance d1 and with the sensor 24 at a distance d2 from the internal surface 28 of the pipeline. This can conveniently be arranged by mounting the Hall effect sensor 24 on a printed circuit board 30, and mounting the magnet 26 to the pcb 30 via a spacer 32, all these parts then being encapsulated in a block 34 of polyurethane or other suitable resin.

The magnet 26 may suitably be a NdFeB material; for use in typical oil pipeline applications a high temperature grade capable of operating to 150°C should be chosen. However, any other suitable magnetic material can be used, for example samarium cobalt. Examples of suitable forms of Hall effect sensor are Allegro 1032 and Honeywell SS 495.

We have established that a particularly suitable arrangement is to have the sensor 24 as close as possible to the wall with d2 about 2 to 3 mm, and to have the magnet 26 arranged to produce radial flux and with d1 about 10 to 12 mm. A suitable size of magnet is 10 x 10 mm, and a suitable size of Hall effect sensor is 2 x 2 mm. This gives a sensitivity which gives a useful range of Hall effect output for a lift-off of the sensor caused by debris from zero to about 20mm, which is the range likely to be found in practice. We have established that the accuracy of the measurements can be less than 1 mm.

Other arrangements are possible but less preferred. For example, it would be possible to use axial flux, but this is likely to be less sensitive. It would also be possible to use magnetic sensors other than Hall effect, for example magnetoresistors or induction coils; however, implementing these would be more complex, especially in pipeline conditions of high pressure and high temperature, and sensitivity is likely to be poorer.

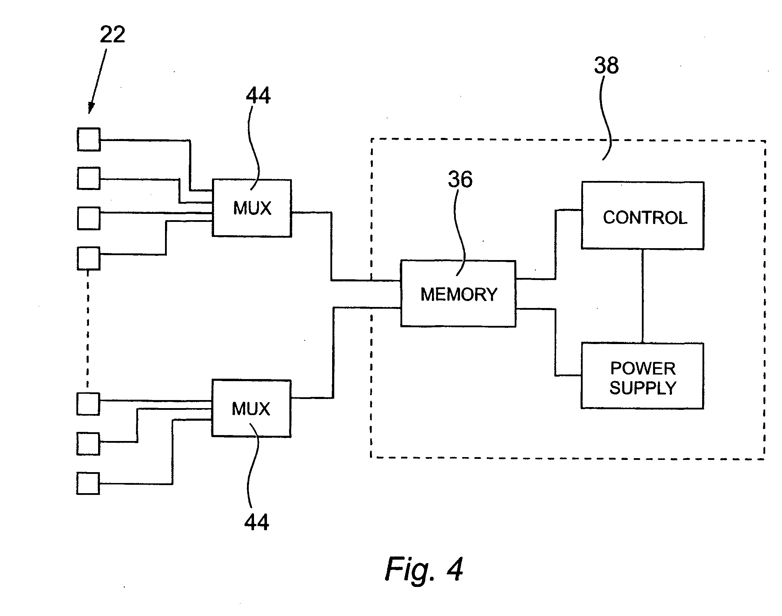

Referring to Fig. 4, typically the outputs of the various sensors 24 are supplied to a memory 36 within the pig, together with odometer readings, such that the condition of the pipeline can be analysed after the pig traverse by downloading the memory 36.

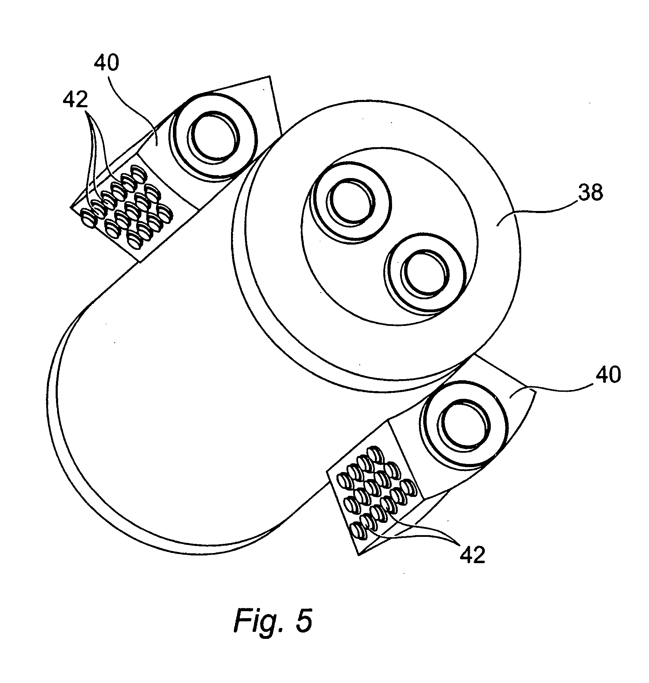

In a preferred arrangement, the memory 36 and associated control and power supply circuits are contained with a pressure vessel 38 (Fig. 5) forming part of the pig body 10, and the sensor signals are multiplexed to the memory 36 by multiplexers 44 contained within a pair of multiplexer boxes 40 secured to the pressure vessel 38. The multiplexer boxes 40 are provided with cable glands 42, one per sensor and are potted with epoxy resin once the cables have been connected, and are connected to the memory 36 via single entries underlying the boxes 40. This arrangement reduces the access requirements to the pressure vessel.

The use of a pressure vessel is particularly beneficial in manufacturing the vehicle to ATEX standards, since high power parts of the system, such as batteries, can be contained within a flameproof enclosure.

The multiplexers 44 may be arranged to sample the sensors on the basis of either distance or time. Distance sampling is preferred, with sampling occurring every 5 mm or so.

The odometer wheels 18 conventionally use Hall effect rotation sensors, and these can also be multiplexed via one or both of the boxes 40.

The pig may also incorporate other sensors (not shown). For example, an axial vibration sensor (which may typically be sensitive to axial accelerations of ± 10g) can be used to indicate areas where the internal surface of the pipeline is uneven, and a differential pressure sensor (which may typically be sensitive to differential pressures of ± 10bar) can be used to identify changes in pipeline bore. It may also be useful to include a temperature sensor.

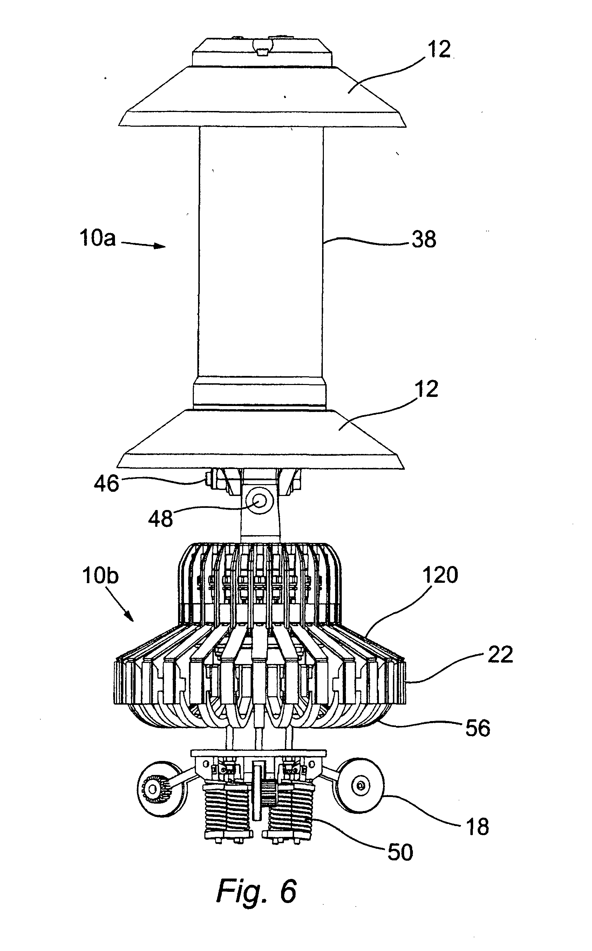

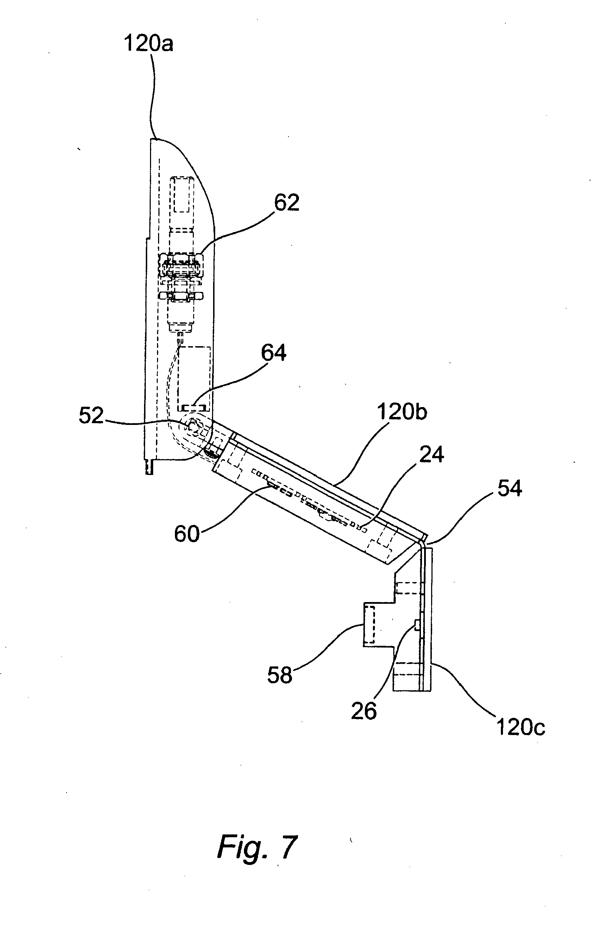

Figs. 6 and 7 show another embodiment of the present invention. In these Figures parts which are similar to the first embodiment are denoted by like reference numerals and will not be further described.

In this embodiment, the body of the pig is in two parts 10a and 10b which are articulated together by a universal joint comprising pivot pins 46 and 48 at mutual right angles. The leading part 10a comprises a pressure vessel 38 and propelling cups 12. The trailing part 10b carries a finger assembly generally designated at 120, which will be described in detail below, and an odometer assembly comprising wheels 18 biased outwardly by springs 50.

The use of a two-part articulated form is particularly suitable for use in narrow bore pipes, for example 10 and 12 inch, where a one-piece pig might have difficulty in traversing bends. In long runs with tight bends it may be desirable to use an articulated pig with three (or more) parts.

The finger assembly 120 as in the previous embodiment comprises a complete ring of outwardly-biased fingers each of which carries a magnetic proximity sensor assembly. In this embodiment however each finger, as best seen in Fig. 7, is formed by three rigid segments 120a, 120b, 120c hinged together. The first segment 120a is secured to the trailing body part 10b. The second segment 120b is hinged to the first segment 120a by means of a hinge pin 52. The second segment 120b and third segment 120c are interconnected by a fibre hinge 54. Each finger is biased outwardly by means of a C-shaped polyurethane body 56 (see Fig. 6) having one end engaged in a channel 58 of the third finger segment 120c and the other end engaged in a similar formation in the body portion 10b.

The sensor assembly comprises a Hall effect sensor 24 and a permanent magnet 26. The associated processing circuitry is provided on a pcb 60 which is carried on the intermediate finger portion 120b, and is connected to a connector 62 within the first finger segment 120a, which is of channel section. In this embodiment, the magnet 26 is carried on the outer segment 120c, while the Hall effect sensor is on the intermediate segment 120b. The spatial relationship is thus different to that of the first embodiment. However, the particular components used may be as in the first embodiment. The magnet 26 and pcb 60 may suitably be encapsulated in resin, for example epoxy or polyurethane.

In this embodiment, each sensor assembly has its own multiplexer on the associated pcb 60. As in the first embodiment, the remaining electronics and power storage are housed within the pressure vessel 38. This arrangement minimises the amount of cabling between the two body portions.

The present embodiment is also capable of performing calliper (i.e. inside diameter) measurements. For this purpose, each finger is provided with means to measure the angular position of the intermediate finger segment 120b with respect to the fixed first finger segment 120a. In the present example, this is by means of a Hall effect sensor 64 located adjacent the hinge pin 52. Other forms of angle detection may be used, for example linear displacement voltage transducers, magnetic sliders, or strain gauges.

This approach to calliper measurement is known per se. However, the present invention makes possible the use of calliper measurement in conjunction with detection of surface contamination simultaneously in a manner which allows the combination of pipeline wall wastage and fouling to be determined, which was not previously possible.

Modifications may be made to the foregoing embodiments within the scope of the invention. The vehicle may be self-propelled from an internal power source or via an umbilical, rather than a pig. Where the vehicle is a pig, it is possible to use one cup rather than two, or to use wall-engaging members other than resilient cups. The flexible fingers may be positioned differently in relation to the driving cups or equivalent; in particular in some uses it is desirable to use a one-piece pig with two driving cups, but with the fingers at the trailing end of the pig, rather than between the cups.

Further sensors may also be mounted on the vehicle, for example known sensors for identifying pipeline furniture such as valves and T-pieces.

The invention thus provides a pipeline pig which is capable of detecting and measuring the thickness of debris independently at numerous locations around the circumference, and distinguishing debris from variations in cross-section caused by corrosion or deformation of the pipe wall.

## Claims

1. A pipeline inspection vehicle comprising:
a body (10);
propulsion means for driving the body (10) through a pipeline; and
at least one finger (20) extending from the body (10) and resiliently movable in a radial direction to engage with the wall of the pipeline;
the finger (20) carrying adjacent its wall-engaging portion a magnetic proximity sensor assembly (22) comprising a permanent magnet (26) arranged to produce a radial flux and a magnetic sensor (24);
**characterised in that** the sensor (24) is spaced a radial distance (d1) from the magnet (26) on the side of the magnet (26) opposed to the body (10), and the sensor (24) provides an output signal which is a function of the spacing between the sensor (24) and metal of the pipeline wall.

2. A vehicle according to claim 1, in which a plurality of said fingers (20) extend from the body (10), the fingers (20) being independently resiliently movable in the radial direction.

3. A vehicle according to claim 2, in which said fingers (20) form a substantially continuous ring around the body (10).

4. A vehicle according to claim 3, in which there are from 25 to 110 fingers (20) for pipelines ranging from 10 inches to 42 inches diameter.

5. A vehicle according to any preceding claim, in which the vehicle is a pig, and includes one or more cups or discs (12) extending from the body (10) for engagement with the wall of the pipeline to drive the pig therethrough by product pressure and flow.

6. A vehicle according to any preceding claim, in which the magnetic sensor (24) comprises a Hall effect sensor.

7. A vehicle according to any preceding claim, including memory means (36) for storing said output signals as the vehicle traverses a pipeline.

8. A vehicle according to claim 7, in which the sensors (24) are interfaced with the memory means (36) through one or more multiplexers (44).

9. A vehicle according to claim 8, in which the memory means (36) and associated circuits are contained within a pressure vessel (38), and the one or more multiplexers (44) are arranged externally of the pressure vessel (38).

10. A vehicle according to claim 9, in which the body (10) is in two parts which are articulated together, and wherein one part of the body (10) comprises the pressure vessel (38) and the other part comprises the finger or fingers (20).

11. A vehicle according to claim 3, including means for measuring the angular deflection of the fingers (20) to provide a measure of interior diameter.

12. A vehicle according to any preceding claim, including distance measuring means (18).

13. A method of monitoring debris in a pipeline, comprising traversing at least one magnetic proximity sensor assembly (22) along the pipeline in physical contact with the internal surface of the pipeline, the sensor assembly (22) comprising a permanent magnet (26) arranged to produce a radial flux and a magnetic sensor (24);
**characterised in that** the sensor (24) is spaced a radial distance (d1) from the magnet (26) on the side of the magnet (26) opposed to the body (10), whereby debris attached to the pipeline wall may be detected by a decreased proximity signal which is a function of the spacing between the sensor (24) and metal of the pipeline wall.

14. The method of claim 13, in which an annular array of such sensor assemblies (22) is traversed to examine the circumference in one pass.

15. The method of claim 13, including also measuring the internal diameter of the pipeline by measuring angular deflection of the fingers (20).

## Patentansprüche

1. Ein Rohrleitungsuntersuchungsfahrzeug, das Folgendes beinhaltet:
einen Körper (10);
Antriebsmittel zum Treiben des Körpers (10) durch eine Rohrleitung; und
mindestens einen Finger (20), der sich von dem Körper (10) erstreckt und federnd in einer radialen Richtung beweglich ist, um mit der Wand der Rohrleitung in Eingriff zu gelangen;
wobei der Finger (20) neben seinem wandeingreifenden Abschnitt eine Baugruppe von magnetischen Näherungssensoren (22) trägt, die einen Permanentmagneten (26), der angeordnet ist, um einen Radialfluss zu erzeugen, und einen magnetischen Sensor (24) beinhaltet;
**dadurch gekennzeichnet, dass** der Sensor (24) auf der dem Körper (10) gegenüberliegenden Seite des Magneten (26) vom Magneten (26) um eine radiale Distanz (d1) beabstandet ist und der Sensor (24) ein Ausgangssignal bereitstellt, das eine Funktion der Beabstandung zwischen dem Sensor (24) und dem Metall der Rohrleitungswand ist.

2. Fahrzeug gemäß Anspruch 1, bei dem sich eine Vielzahl der Finger (20) von dem Körper (10) erstrecken, wobei die Finger (20) unabhängig federnd in der radialen Richtung beweglich sind.

3. Fahrzeug gemäß Anspruch 2, bei dem die Finger (20) einen im Wesentlichen durchgehenden Ring um den Körper (10) bilden.

4. Fahrzeug gemäß Anspruch 3, bei dem es von 25 bis 110 Finger (20) für Rohrleitungen im Bereich von 10 Zoll bis 42 Zoll Durchmesser gibt.

5. Fahrzeug gemäß einem der vorhergehenden Ansprüche, bei dem das Fahrzeug ein Molch ist und eine oder mehrere Schalen oder Scheiben (12) umfasst, die sich von dem Körper (10) zum Eingreifen mit der Wand der Rohrleitung erstrecken, um den Molch durch diese mittels Produktdruck und -fluss zu treiben.

6. Fahrzeug gemäß einem der vorhergehenden Ansprüche, bei dem der magnetische Sensor (24) einen Hall-Effekt-Sensor beinhaltet.

7. Fahrzeug gemäß einem der vorhergehenden Ansprüche, das ein Speichermittel (36) zum Speichern der Ausgangssignale umfasst, wenn das Fahrzeug eine Rohrleitung durchläuft.

8. Fahrzeug gemäß Anspruch 7, bei dem die Sensoren (24) über einen oder mehrere Multiplexer (44) mit dem Speichermittel (36) gekoppelt sind.

9. Fahrzeug gemäß Anspruch 8, bei dem das Speichermittel (36) und die zugehörigen Schaltkreise in einem Druckbehälter (38) enthalten sind und der eine oder die mehreren Multiplexer (44) extern vom Druckbehälter (38) angeordnet sind.

10. Fahrzeug gemäß Anspruch 9, bei dem der Körper (10) in zwei Teilen vorliegt, die gelenkig aneinander angebracht sind, und wobei ein Teil des Körpers (10) den Druckbehälter (38) beinhaltet und der andere Teil den Finger oder die Finger (20) beinhaltet.

11. Fahrzeug gemäß Anspruch 3, das ein Mittel zum Messen der Winkelablenkung der Finger (20) umfasst, um eine Messung des Innendurchmessers bereitzustellen.

12. Fahrzeug gemäß einem der vorhergehenden Ansprüche, das ein Distanzmessmittel (18) umfasst.

13. Ein Verfahren zum Überwachen von Rückständen in einer Rohrleitung, das das Durchlaufen lassen von mindestens einer Baugruppe von magnetischen Näherungssensoren (22) entlang der Rohrleitung in physischem Kontakt mit der internen Oberfläche der Rohrleitung beinhaltet, wobei die Baugruppe von Sensoren (22) einen Permanentmagneten (26), der angeordnet ist, um einen Radialfluss zu erzeugen, und einen Magnetsensor (24) beinhaltet;
**dadurch gekennzeichnet, dass** der Sensor (24) auf der dem Körper (10) gegenüberliegenden Seite des Magneten (26) vom Magneten (26) um eine radiale Distanz (d1) beabstandet ist, wobei an der Rohrleitungswand anhaftende Rückstände mittels eines verminderten Näherungssignals, das eine Funktion der Beabstandung zwischen dem Sensor (24) und dem Metall der Rohrleitungswand ist, erkannt werden können.

14. Verfahren gemäß Anspruch 13, bei dem eine ringförmige Anordnung solcher Baugruppen von Sensoren (22) durchlaufen gelassen wird, um den Umfang in einem Durchgang zu untersuchen.

15. Verfahren gemäß Anspruch 13, das auch das Messen des internen Durchmessers der Rohrleitung durch Messen der Winkelablenkung der Finger (20) umfasst.

## Revendications

1. Un véhicule d'inspection de pipeline comprenant :
un corps (10) ;
un moyen de propulsion destiné à entraîner le corps (10) à travers un pipeline ; et
au moins un doigt (20) s'étendant depuis le corps (10) et déplaçable de façon résiliente dans une direction radiale pour se mettre en prise avec la paroi du pipeline ;
le doigt (20) portant, adjacent à sa portion de mise en prise avec la paroi, un assemblage à capteur de proximité magnétique (22) comprenant un aimant permanent (26) arrangé pour produire un flux radial et un capteur magnétique (24) ;
**caractérisé en ce que** le capteur (24) est espacé d'une distance radiale (d1) de l'aimant (26) sur le côté de l'aimant (26) opposé au corps (10), et le capteur (24) fournit un signal de sortie qui est une fonction de l'espacement entre le capteur (24) et le métal de la paroi de pipeline.

2. Un véhicule selon la revendication 1, dans lequel une pluralité desdits doigts (20) s'étendent depuis le corps (10), les doigts (20) étant indépendamment déplaçables de façon résiliente dans la direction radiale.

3. Un véhicule selon la revendication 2, dans lequel lesdits doigts (20) forment un anneau substantiellement continu autour du corps (10).

4. Un véhicule selon la revendication 3, dans lequel il y a de 25 à 110 doigts (20) pour des pipelines dont le diamètre est compris dans la gamme allant de 10 pouces à 42 pouces.

5. Un véhicule selon n'importe quelle revendication précédente, le véhicule étant un racleur, et comportant une(un) ou des coupes ou disques (12) s'étendant depuis le corps (10) destinés à se mettre en prise avec la paroi du pipeline pour entraîner le racleur à travers celui-ci par pression matière et écoulement.

6. Un véhicule selon n'importe quelle revendication précédente, dans lequel le capteur magnétique (24) comprend un capteur à effet Hall.

7. Un véhicule selon n'importe quelle revendication précédente, comportant un moyen formant mémoire (36) destiné à stocker lesdits signaux de sortie alors que le véhicule traverse un pipeline.

8. Un véhicule selon la revendication 7, dans lequel les capteurs (24) sont en interface avec le moyen formant mémoire (36) par le biais d'un ou de multiplexeurs (44).

9. Un véhicule selon la revendication 8, dans lequel le moyen formant mémoire (36) et les circuits associés sont contenus au sein d'un récipient à pression (36) et cet un ou ces multiplexeurs (44) sont arrangés de façon externe au récipient à pression (38).

10. Un véhicule selon la revendication 9, dans lequel le corps (10) est en deux parties qui sont articulées ensemble, et dans lequel une partie du corps (10) comprend le récipient à pression (38) et l'autre partie comprend le doigt ou les doigts (20).

11. Un véhicule selon la revendication 3, comportant un moyen destiné à mesurer la déflexion angulaire des doigts (20) pour fournir une mesure de diamètre intérieur.

12. Un véhicule selon n'importe quelle revendication précédente, comportant un moyen de mesure de distance (18).

13. Une méthode de surveillance des débris dans un pipeline, comprenant la traversée d'au moins un assemblage à capteur de proximité magnétique (22 le long du pipeline en contact physique avec la surface interne du pipeline, l'assemblage à capteur (22) comprenant un aimant permanent (26) arrangé pour produire un flux radial et un capteur magnétique (24) ;
**caractérisé en ce que** le capteur (24) est espacé d'une distance radiale (d1) de l'aimant (26) sur le côté de l'aimant (26) opposé au corps (10), grâce à quoi des débris attachés à la paroi de pipeline peuvent être détectés par un signal de proximité décru qui est une fonction de l'espacement entre le capteur (24) et le métal de la paroi de pipeline.

14. La méthode de la revendication 13, dans laquelle un agencement annulaire de tels assemblages à capteurs (22) est amené à traverser pour examiner la circonférence en un passage.

15. La méthode de la revendication 13, comportant aussi le fait de mesurer le diamètre interne du pipeline en mesurant la déflexion angulaire des doigts (20).
